# EUROPÄISCHE PATENTANMELDUNG

(11) **EP 3 312 438 A1**
(43) Veröffentlichungstag der Anmeldung: **25.04.2018**
(21) Anmeldenummer: 16194813.8
(22) Anmeldetag: 20.10.2016
(51) Int. Cl.: F16B 2/02, F16B 2/10

(54) **BEFESTIGUNGSELEMENT FÜR ARBEITSPLATZZUBEHÖR, MONTAGEKOMPOSITION UND MÖBELKOMPOSITION**

(71) Anmelder: Vitra Patente AG, 4127 Birsfelden (CH)
(72) Erfinder: Keller, Stefan, 79585 Steinen - Hofen (DE); Schütt, Helmut, 79379 Müllheim - Hügelheim (DE)
(74) Vertreter: Latscha Schöllhorn Partner AG

(57) **Zusammenfassung**

Ein Befestigungselement (1) umfasst ein erstes Klammerelement (11) und ein zum ersten Klammerelement (11) um eine Drehachse (D) drehbares zweites Klammerelement (12). Die ersten und zweiten Klammerelemente (11) weist jeweils einen sich im Wesentlichen senkrecht zur Drehachse (D) erstreckenden ersten beziehungsweise zweiten Hebelabschnitt (112, 122) und einen sich davon weg im Wesentlichen parallel zur Drehachse (D) erstreckenden ersten beziehungsweise zweiten Verbindungsabschnitt (114, 124) auf. Der erste Hebelabschnitt (112) und der zweite Hebelabschnitt (122) sind zwischen einer gespreizten Hebelstellung und einer ungespreizten Hebelstellung um die Drehachse (D) zueinander bewegbar. Das erste Klammerelement (11) und das zweite Klammerelement (12) sind dazu ausgestaltet, den Gegenstand zu halten, wenn sich der erste Hebelabschnitt (112) und der zweite Hebelabschnitt (122) in der gespreizten Hebelstellung befinden und den Gegenstand nicht zu halten, wenn sie sich in der ungespreizten Hebelstellung befinden. Die ersten und zweiten Klammerelemente (11, 12) umfassen jeweils einen sich im Wesentlichen senkrecht zur Drehachse (D) erstreckenden ersten beziehungsweise zweiten Stativabschnitt (111, 121), der ortsfest mit dem Hebelabschnitt (112, 122) verbunden ist und sich in einem stumpfen Winkel (α, -α) zum Hebelabschnitt (112, 122) erstreckt. Der erste Stativabschnitt (111) und der zweite Stativabschnitt (121) befinden sich in einer ungespreizten Stativstellung, wenn sich die ersten und zweiten Hebelabschnitte (112, 122) in der gespreizten Hebelstellung befinden. Die ersten und zweiten Stativabschnitte (111, 121) befinden sich in einer gespreizten Stativstellung, wenn sich die ersten und zweiten Hebelabschnitte (112, 122) in der ungespreizten Hebelstellung befinden.

## Beschreibung

### Technisches Gebiet

Die Erfindung betrifft ein Befestigungselement gemäss dem Oberbegriff des unabhängigen Anspruchs 1, sowie eine Montagekomposition mit einem solchen Befestigungselement und eine Möbelkomposition. Die Erfindung kann insbesondere im Gebiet der Büro- und Werkstattmöbel zum Anbringen von Objekten, insbesondere von Arbeitsplatzzubehör, an einem Gegenstand wie an einer Arbeits- oder Tischplatte eingesetzt werden.

### Stand der Technik

Um Arbeitsplatzzubehör wie z.B. Beleuchtungsmittel, insbesondere Arbeitsplatz- oder Schreibtischleuchten, Computerbildschirme oder Ablagen bzw. Zusatztische für Telekommunikationsgeräte o.ä. platzsparend und bedarfsgerecht an bzw. auf Arbeitsplätzen anordnen zu können, kommen häufig Befestigungselemente zum Einsatz, welche an einer Arbeitsplatte oder Tischplatte festgeklemmt sind.

Ein entsprechendes Befestigungselement ist beispielsweise aus der DE 20 2008 015 190 U1 bekannt. Das dort gezeigte Befestigungselement weist zwei herkömmliche Klemmbacken auf, welche über einen Zapfen gelenkig verbunden sind.

Ein möglicher Nachteil vieler bekannter Befestigungselemente zur klemmenden Befestigung von Arbeitsplatzzubehör kann darin gesehen werden, dass sie für eine Befestigung von verhältnismässig grossen und oder schweren Gegenständen unter Umständen eine erforderliche oder gewünschte Stabilität nicht gewährleisten können oder verhältnismässig umständlich zu montieren sind.

Die DE 10 2011 013 289 B4 schlägt deswegen ein Befestigungselement in Form einer Klemmvorrichtung vor, mit welcher eine hohe Stabilität des zu haltenden Gegenstandes erzielt werden kann. Allerdings ist die besagte Klemmvorrichtung konstruktiv relativ aufwendig aus einer vergleichsweise grossen Anzahl von Einzelteilen aufgebaut. Zum Anbringen oder Lösen der Klemmvorrichtung ist zudem ein Werkzeug, beispielsweise ein Schraubendreher oder ein Innen-Sechskantschlüssel, erforderlich.

Vor diesem Hintergrund ist eine Aufgabe der Erfindung, ein Befestigungselement beziehungsweise ein Befestigungssystem vorzuschlagen, mittels welchem die vorstehend beschriebenen Nachteile vermieden werden können.

### Darstellung der Erfindung

Die Aufgabe wird erfindungsgemäss durch ein Befestigungselement gelöst, wie es im unabhängigen Anspruch 1 definiert ist, sowie durch eine Montagekomposition, wie sie im unabhängigen Anspruch 17 definiert ist, und eine Möbelkomposition, wie sie im unabhängigen Anspruch 18 definiert ist. Vorteilhafte Ausführungsvarianten der Erfindung ergeben sich aus den abhängigen Ansprüchen.

Das Wesen der Erfindung besteht im Folgenden: Ein Befestigungselement zur formschlüssigen beziehungsweise klemmenden Befestigung an einem insbesondere plattenförmigen Gegenstand wie beispielsweise einer Tischplatte umfasst ein erstes Klammerelement und ein zum ersten Klammerelement um eine Drehachse drehbares beziehungsweise kippbares beziehungsweise klappbares zweites Klammerelement. Das erste Klammerelement weist einen sich im Wesentlichen senkrecht zur Drehachse erstreckenden ersten Hebelabschnitt und einen sich vom ersten Hebelabschnitt weg im Wesentlichen parallel zur Drehachse erstreckenden ersten Verbindungsabschnitt auf. Analog dazu weist das zweite Klammerelement einen sich im Wesentlichen senkrecht zur Drehachse erstreckenden zweiten Hebelabschnitt und einen sich vom zweiten Hebelabschnitt weg im Wesentlichen parallel zur Drehachse erstreckenden zweiten Verbindungsabschnitt auf. Der erste Hebelabschnitt des ersten Klammerelements und der zweite Hebelabschnitt des zweiten Klammerelements sind zwischen einer gespreizten Hebelstellung und einer ungespreizten Hebelstellung um eine Drehachse zueinander bewegbar. Das erste Klammerelement und das zweite Klammerelement sind dazu ausgestaltet, den Gegenstand zu halten, wenn sich der erste Hebelabschnitt des ersten Klammerelements und der zweite Hebelabschnitt des zweiten Klammerelements in der gespreizten Hebelstellung befinden, und den Gegenstand nicht zu halten, wenn sich der erste Hebelabschnitt des ersten Klammerelements und der zweite Hebelabschnitt des zweiten Klammerelements in der ungespreizten Hebelstellung befinden.

Das erste Klammerelement umfasst einen sich im Wesentlichen senkrecht zur Drehachse erstreckenden ersten Stativabschnitt. Der erste Stativabschnitt ist ortsfest mit dem ersten Hebelabschnitt des ersten Klammerelements verbunden und ersteckt sich in einem stumpfen Winkel zum ersten Hebelabschnitt des ersten Klammerelements. Das zweite Klammerelement umfasst einen sich im Wesentlichen senkrecht zur Drehachse erstreckenden zweiten Stativabschnitt. Der zweite Stativabschnitt ist ortsfest mit dem zweiten Hebelabschnitt des zweiten Klammerelements verbunden und erstreckt sich in einem stumpfen Winkel zum zweiten Hebelabschnitt des zweiten Klammerelements. Der erste Stativabschnitt des ersten Klammerelements und der zweite Stativabschnitt des zweiten Klammerelements befinden sich in einer ungespreizten Stativstellung, wenn sich der erste Hebelabschnitt des ersten Klammerelements und der zweite Hebelabschnitt des zweiten Klammerelements in der gespreizten Hebelstellung befinden. Der erste Stativabschnitt des ersten Klammerelements und der zweite Stativabschnitt des zweiten Klammerelements befinden sich in einer gespreizten Stativstellung, wenn sich der erste Hebelabschnitt des ersten Klammerelements und der zweite Hebelabschnitt des zweiten Klammerelements in der ungespreizten Hebelstellung befinden.

Der Begriff "Gegenstand", wie er im Zusammenhang mit der Erfindung verwendet wird, kann sich insbesondere auf ein Objekt beziehen, an dem das Befestigungselement befestigt werden soll. Insbesondere kann über das Befestigungselement ein weiteres Objekt am Gegenstand montiert werden. Dabei ist der Gegenstand insbesondere ein plattenförmiger Gegenstand wie eine Tischbeziehungsweise Arbeitsplatte oder etwas ähnliches. Das weitere Objekt kann ein Arbeitsplatzzubehör beziehungsweise Schreibtischzubehör wie beispielsweise eine Leuchte, ein Computerbildschirm, eine Trennwand, eine Ablagen bzw. ein Zusatztisch für ein Telefon oder etwas ähnliches sein.

Der Begriff "ungespreizt" kann sich im Zusammenhang mit den Hebelabschnitten und den Stativabschnitten auf eine Position beziehen, in der die beiden Hebelabschnitte beziehungsweise die beiden Stativabschnitte vollständig oder nahezu vollständig aneinander anliegen beziehungsweise parallel zueinander ausgerichtet sind. Dazu sind die Hebelabschnitte beziehungsweise die Stativabschnitte in einer ersten Orientierung quasi maximal aufeinander zu geklappt beziehungsweise gedreht. In der ungespreizten Hebel- und Stativstellung kontaktieren sich die Hebelabschnitte beziehungsweise die Stativabschnitte typischerweise. Durch das Zusammenklappen der Hebelabschnitte kann der Gegenstand losgelöst werden. Das Befestigungselement kann sich in der ungespreizten Hebelstellung also in einer offenen Stellung befinden. Analog dazu können in der ungespreizten Stativstellung die ersten und zweiten Stativabschnitte maximal oder quasi maximal aufeinander zu geklappt beziehungsweise gedreht sein.

Der Begriff "gespreizt" kann sich im Zusammenhang mit den Hebelabschnitten und den Stativabschnitten darauf beziehen, dass die beiden Hebelabschnitte beziehungsweise die beiden Stativabschnitte um die Drehachse auseinander gekippt beziehungsweise geschwenkt beziehungsweise geklappt beziehungsweise gedreht sind. Dabei können die ersten und zweiten Hebelabschnitte in der gespreizten Hebelstellung in einer der ersten Orientierung entgegengesetzten zweiten Orientierung maximal oder quasi maximal auseinander geklappt beziehungsweise gedreht sein. Durch dieses Auseinanderklappen kann der Gegenstand gehalten werden. Das Befestigungselement kann sich so in einer geschlossenen Stellung befinden. Analog dazu können in der gespreizten Stativstellung die ersten und zweiten Stativabschnitte maximal oder quasi maximal auseinander geklappt beziehungsweise gedreht sein.

Der Begriff "halten" und Abwandlungen davon können sich im Zusammenhang mir der Erfindung auf ein Verbinden beziehen, das für die Befestigung des Befestigungselements ausreichend fest und stabil ist. Insbesondere kann ein solches Halten über einen Formschluss, über ein Klemmen oder über eine Mischung davon erfolgen.

Das erste Klammerelement und das zweite Klammerelement können so miteinander verbunden sein, dass sie an der Drehachse wippenartig aneinander gelagert sind. Damit kann effizient erreicht werden, dass bei einem Zusammenklappen der ersten und zweiten Stativabschnitte die ersten und zweiten Hebelabschnitte auseinander geklappt werden.

Das erfindungsgemässe Befestigungselement kann insbesondere an dem zumindest annähernd plattenförmigen Gegenstand wie beispielsweise einer Tisch- oder Arbeitsplatte aber auch an einem Bord, einem Brett, einem Regal, einem Einlegeboden eines Regals o.Ä., einem Kranz eines Schranks, lösbar formschlüssig beziehungsweise klemmend fixiert werden. Dazu wird das Befestigungselement durch Drehen der Klammerelemente um die Drehachse in der ersten Orientierung zunächst in die geöffnete Stellung oder zumindest annähernd in die geöffnete Stellung gebracht, was insbesondere dadurch bewerkstelligt wird, dass die beiden Hebelabschnitte aufeinander zu bewegt und insbesondere zusammen- oder aneinandergepresst werden.

Anschliessend kann das Befestigungselement in solcher Weise auf den plattenförmigen Gegenstand aufgeschoben oder gesteckt werden, dass ein Teil des Befestigungselements auf einer ersten Oberfläche des plattenförmigen Gegenstands aufliegt, der erste und zweite Verbindungsabschnitt sich hingegen in einer Position gegenüber einer zweiten Oberfläche des plattenförmigen Gegenstands befinden. Der plattenförmige Gegenstand oder sein Rand wird somit vom Befestigungselement umgriffen. Eine Dicke des plattenförmigen Gegenstands sollte dabei geringer sein als eine maximale Weite eines Haltebereichs des Befestigungselements. In anderen Worten umgreift das Befestigungselement den plattenförmigen Gegenstand zumindest annähernd U-förmig, wobei der Hebelabschnitt vorzugsweise als Anschlag dient und vorgibt, wie weit das Befestigungselement maximal auf den plattenförmigen Gegenstand aufgeschoben oder gesteckt werden kann.

Sobald das Befestigungselement auf den plattenförmigen Gegenstand aufgeschoben oder gesteckt ist, kann es durch Drehen der Klammerelemente um die Drehachse in der zweiten Orientierung in Richtung der geschlossenen Stellung verstellt werden. Erfindungsgemäss kann dies besonders einfach und effizient dadurch bewerkstelligt werden, dass die beiden Stativabschnitte aufeinander zu bewegt und insbesondere zusammen- oder aneinandergepresst werden. Dazu können die beiden Stativabschnitte beispielsweise manuell und werkzeugfrei aufeinander zu gedrückt werden.

Durch Drehen der Klammerelemente um die Drehachse in der zweiten Orientierung insbesondere durch ein Zusammendrücken der Stativabschnitt wird eine Weite des Haltebereichs kontinuierlich reduziert. Ab einem Moment oder einer Relativposition der beiden Klammerelemente, in welchem/welcher der erste und zweite Verbindungsabschnitt an der zweiten Oberfläche des plattenförmigen Gegenstands anliegen beziehungsweise in welchem/welcher die Weite des Haltebereichs einer Dicke eines in den Haltebereich hineinragenden Bereichs des plattenförmiges Gegenstandes entspricht, ist ein weiteres Drehen der Klammerelemente um die Drehachse in der zweiten Orientierung nicht mehr oder allenfalls noch unter Verformung des Befestigungselements und/oder des plattenförmiges Gegenstandes möglich. Derartige Verformungen treten insbesondere auf, wenn die beiden Stativabschnitte mit zunehmender Kraft zusammen- oder aneinandergepresst werden.

Wird das Befestigungselement nun arretiert, sodass die Relativposition der beiden Klammerelemente fixiert ist, ist es am plattenförmigen Gegenstand festgehalten. Dabei verhindert eine Haftreibung, dass das Befestigungselement vom plattenförmigen Gegenstand abrutschen oder abgezogen werden kann. Die Arretierung kann dabei ausschliesslich aufgrund von Reibung in einer Lagerung erfolgen, mittels welcher Lagerung das zweite Klammerelement am ersten Klammerelement drehbar gelagert ist. Vorzugsweise sind aber Arretierungsmittel vorhanden, insbesondere in Form einer elastischen Vorspannung und/oder in Form von Fixierungsmitteln, welche an oder auf das Befestigungselement, insbesondere die Stativabschnitte, aufgesteckt werden, wie weiter unten noch ausführlicher erläutert wird.

An den Stativabschnitten kann nun ein Objekt wie insbesondere ein Arbeitsplatzzubehör montiert werden. Dazu kann das Objekt mit den Stativabschnitten und somit indirekt mit dem Gegenstand verbunden werden. Das erfindungsgemässe Befestigungselement lässt sich in äusserst einfacher Weise und insbesondere werkzeugfrei handhaben und kann mit minimaler Übung auch einhändig bedient werden. Ferner kann das erfindungsgemässe Befestigungselement besonders effizient und kostengünstig hergestellt und zusammengebaut werden, da es nur aus wenigen Einzelteilen - insbesondere die beiden Klammerelemente - besteht.

In anderen Worten ermöglicht das erfindungsgemässe Befestigungselement eine effiziente und insbesondere werkzeugfreie Montage eines Objekts am Gegenstand. Dabei kann das Befestigungselement verhältnismässig einfach aus wenigen Teilen aufgebaut sein, was eine verhältnismässig kostengünstige Herstellung ermöglicht. Vorzugsweise sind das erste Klammerelement und das zweite Klammerelement jeweils einstückig ausgebildet. Eine solche einstückige Ausgestaltung ermöglicht eine besonders einfache und effizient Konstruktion und Herstellung des Befestigungselements. Die Klammerelemente können aus einem Kunststoff beispielsweise spritzgusstechnisch hergestellt sein. Oder sie können als Zinkdruckgussteile gefertigt sein.

Vorzugsweise umfasst das Befestigungselement einen sich bevorzugt zumindest in Richtung der Drehachse erstreckenden Auflagebereich, der dazu ausgestaltet ist, während einer Befestigung des Befestigungselements am Gegenstand, bei der sich der erste Hebelabschnitt des ersten Klammerelements und der zweite Hebelabschnitt des zweiten Klammerelements in der gespreizten Hebelstellung befinden, am Gegenstand anzuliegen. Ein solcher Auflagebereich kann ein stabiles und festes Halten des Gegenstands durch das Befestigungselement ermöglichen.

Dabei ist zwischen dem Auflagebereich und den beiden erster Verbindungsabschnitt des ersten Klammerelements und zweiter Verbindungsabschnitt des zweiten Klammerelements vorzugsweise ein Haltebereich gebildet, dessen Weite beziehungsweise Mächtigkeit in der gespreizten Hebelstellung des ersten Hebelabschnitts des ersten Klammerelements und des zweiten Hebelabschnitts des zweiten Klammerelements kleiner ist als in der ungespreizten Hebelstellung des ersten Hebelabschnitts des ersten Klammerelements und des zweiten Hebelabschnitts des zweiten Klammerelements.

Vorzugsweise ist ein kürzester Abstand zwischen einer Ebene, in welcher der erste Verbindungsabschnitt des ersten Klammerelements und der zweite Verbindungsabschnitt des zweiten Klammerelements liegen, und dem Auflagebereich in der gespreizten Hebelstellung des ersten Hebelabschnitts des ersten Klammerelements und des zweiten Hebelabschnitts des zweiten Klammerelements kleiner als in der ungespreizten Hebelstellung des ersten Hebelabschnitts des ersten Klammerelements und des zweiten Hebelabschnitts des zweiten Klammerelements.

Der Begriff "kürzester Abstand" bezieht sich in diesem Zusammenhang auf die kleinste Distanz zwischen der Ebene und dem Auflagebereich. Der kürzeste Abstand ist also da zu finden, wo die Ebene und der Auflagebereich einander am nächsten stehen. Üblicherweise können zwischen der Ebene und dem Auflagebereich eine Vielzahl von Distanzen ausgewiesen werden, wobei die kürzest mögliche Distanz dem kürzesten Abstand entspricht. Falls die Klammerelemente quasi spiegelsymmetrisch ausgebildet sind beziehungsweise falls die ersten und zweiten Hebelabschnitte etwa gleich lang sind, erstreckt sich der kürzeste Abstand typischerweise rechtwinklig von der Ebene.

Eine solche Anordnung kann eine zweckgerichtete Veränderung der für ein Halten relevanten Komponenten des Befestigungselements ermöglichen. Dadurch kann das Befestigungselement effizient den Gegenstand halten. Insbesondere kann der Gegenstand zwischen der Ebene und dem Auflageabschnitt angeordnet werden. Und indem der Abstand beim Aufspreizen der ersten und zweiten Hebelabschnitte beziehungsweise beim Zusammendrücken der Stativabschnitte reduziert wird, kann der Gegenstand effizient gehalten werden.

Bevorzugt weist das erste Klammerelement einen ersten Auflageabschnitt und das zweite Klammerelement einen zweiten Auflageabschnitt auf, die zusammen den Auflagebereich bilden. Eine solche Ausgestaltung der Klammerelemente ermöglicht eine effiziente Realisierung des Auflagebereichs mit verhältnismässig wenigen Bauteilen.

Vorzugsweise umfasst das Befestigungselement ein Federelement, welches so angeordnet ist, dass das erste Klammerelement und das zweite Klammerelement in die gespreizte Hebelstellung und in die ungespreizte Stativstellung gedrückt werden. Auf diese Weise kann das Befestigungselement so vorgespannt sein, dass es ohne aktive Betätigung haltend ist. Das heisst, ohne dass die Hebelabschnitte aufeinander zu gedrückt werden, sind sie in der gespreizten Hebelstellung und halten den bestimmungsgemäss positionierten Gegenstand.

Dabei weist das Federelement vorzugsweise ein elastisches Band auf, welches um den ersten Stativabschnitt des ersten Klammerelements und den zweiten Stativabschnitt des zweiten Klammerelements herum angeordnet ist. Ein solches elastisches Band ermöglicht eine verhältnismässig einfache und effizient wirkende Realisierung des Federelements, das bei Bedarf auch verhältnismässig einfach ersetzt werden kann. Das elastische Band kann insbesondere in Form eines O-Rings ausgeführt sein.

Dabei umfassen der erste Stativabschnitt des ersten Klammerelements und der zweite Stativabschnitt des zweiten Klammerelements vorzugsweise jeweils eine Nut, in der das elastische Band positioniert ist. Eine solche Nut kann ein Abrutschen oder sonstiges Verschieben des elastischen Bandes einfach und effizient verhindern.

Bevorzugt weisen der erste Hebelabschnitt des ersten Klammerelements und der zweite Hebelabschnitt des zweiten Klammerelements jeweils zwei Längsenden auf, wobei die Drehachse in einem Bereich des einen der Längsenden und der erste Verbindungsabschnitt beziehungsweise der zweite Verbindungsabschnitt in einem Bereich des anderen der Längsenden angeordnet ist. Eine solche Anordnung ermöglicht eine effizient Aufspreizung und Schliessung der Hebelabschnitte zueinander. Auch kann über den quasi maximalen Hebel eine verhältnismässig grosse Kraft auf die Klammabschnitte übertragen werden, was ein verhältnismässig starkes Halten ermöglicht.

Bevorzugt weisen der erste Verbindungsabschnitt des ersten Klammerelements und der zweite Verbindungsabschnitt des zweiten Klammerelements jeweils eine Nase beziehungsweise einen Vorsprung auf, die/der sich in Richtung auf die Drehachse und/oder auf den Auflagebereich erstrecken. Solche Nasen beziehungsweise Vorsprünge ermöglichen es, das Befestigungselement zusätzlich zum Halten gegen ein Abrutschen vom Gegenstand zu sichern. Beispielsweise können dazu die Nasen beziehungsweise Vorsprünge in eine geeignete Struktur des Gegenstands einhängen und somit das Befestigungselement am Gegenstand sichern.

In einer bevorzugten Ausführung des erfindungsgemässen Befestigungselements ist am Auflagebereich ein dritter Vorsprung, insbesondere in Form einer dritten Nase, ausgebildet, welcher sich in Richtung von der Drehachse weg und/oder vom Auflagebereich weg erstreckt.

Vorzugsweise ist der erste Auflageabschnitt des ersten Klammerelements von einem am ersten Klammerelement ausgebildeten planaren ersten Oberflächenbereich gebildet und der zweite Auflageabschnitt des zweiten Klammerelements von einem am zweiten Klammerelement ausgebildeten planaren Oberflächenbereich. Dabei liegen der erste und der zweite planare Oberflächenbereich in der geschlossenen Stellung des Befestigungselements vorzugsweise so im Wesentlichen in einer Ebene, dass sie den Auflagebereich bilden.

Die beiden Stativabschnitte des Befestigungselements verlaufen in der geschlossenen Stellung vorzugsweise derart, dass Objekte wie Arbeitsplatzzubehör wie beispielsweise Arbeitsplatz- oder Schreibtischleuchten, Computerbildschirme oder Ablagen beziehungsweise Zusatztische für Telefone, aber auch Halterungen für Arbeitsplatzzubehör der vorstehend genannten Art, mittels korrespondierender Montagemittel auf diese aufgesteckt werden können: Die Montagemittel sind dabei bevorzugt als Fixierungsmittel ausgelegt, die das Befestigungselement in der geschlossenen Stellung arretieren, in die geschlossene Stellung verspannen und/oder die beiden Stativabschnitte insbesondere zusammen- oder aneinanderpressen. Vorzugsweise verlaufen die beiden Stativabschnitte dazu in der geschlossenen Stellung des Befestigungselements zumindest annähernd parallel zueinander, wobei ferner vorzugsweise äussere, vom jeweils gegenüberliegenden Stativabschnitt abgewandte Oberflächen der Stativabschnitte vorzugsweise eine Mantelfläche eines gemeinsamen Zylinders oder eines sich in Richtung von der Drehachse weg verjüngenden Konus definieren. Höchst vorzugsweise bilden die beiden Stativabschnitte in der geschlossenen Stellung einen sich senkrecht zur Drehachse erstreckenden Zylinder oder einen sich in Richtung von der Drehachse weg verjüngenden Konus, wobei sie vorzugsweise mit einander gegenseitig zugewandten, planaren Oberflächenbereichen aneinander anliegen.

Vorzugsweise bilden der erste Stativabschnitt des ersten Klammerelements und der zweite Stativabschnitt des zweiten Klammerelements zusammen in der ungespreizten Stativstellung, in der sie vorzugsweise aneinander anliegen, einen sich senkrecht zur Drehachse erstreckenden Zylinder. Ein solcher Zylinder ermöglicht eine effiziente Befestigung eines Objekts am Befestigungselement und indirekt am Gegenstand. Beispielsweise kann dazu ein Rohr über den Zylinder gestülpt werden, an dem das Objekt befestigt ist. Das Rohr kann zudem verhindern, dass die Stativabschnitte gespreizt werden können. Somit kann das Befestigungselement am Gegenstand arretiert und gesichert werden.

Die korrespondierenden Montagemittel umfassen dabei vorzugsweise zumindest eine zylindrische oder konische Öffnung und/oder Bohrung, welche derart dimensioniert ist, dass sie insbesondere passgenau auf mindestens einen der Stativabschnitte vorzugsweise auf die beiden Stativabschnitte des Befestigungselements in der geschlossenen Stellung bzw. das Stativelement aufgeschoben beziehungsweise aufgesteckt werden kann. Insbesondere können die Montagemittel einen rohrförmigen beispielsweise als Stativrohr ausgebildeten Abschnitt umfassen.

Vorzugsweise sind die Klammerelemente zumindest in einem gewissen Umfang elastisch ausgeführt. Dies erlaubt es, das Befestigungselement an einem plattenförmigen Gegenstand zu befestigen, der eine Dicke d aufweist, welche eine Weite w_{closed} des Haltebereichs beziehungsweise einen Abstand in der geschlossenen Stellung geringfügig insbesondere um 1% bis 20%, vorzugsweise um 2% bis 5% übersteigt. Dies kann bewirken, dass das auf den plattenförmigen Gegenstand aufgeschobene oder gesteckte Befestigungselement zunächst nicht vollständig in die geschlossene Stellung gebracht werden muss. Werden die beiden Stativabschnitte nun mit zunehmender Kraft zusammen- oder aneinandergepresst, kann es zu einer elastischen Verformung des Befestigungselements kommen. Wird das Befestigungselement in einem derart verformten Zustand arretiert, entsteht aufgrund der elastischen Verformung eine Kraft auf die erste Oberfläche und die zweite Oberfläche, wodurch eine Klemmwirkung verbessert und zusätzlich verhindert wird, dass das Befestigungselement vom plattenförmigen Gegenstand abrutschen oder abgezogen werden kann.

Bevorzugt weist das erste Klammerelement in einem Bereich zwischen erstem Stativabschnitt und erstem Hebelabschnitt eine parallel zur Drehachse verlaufende zylindrische Öffnung vorzugsweise Bohrung auf zur drehbaren Lagerung des zweiten Klammerelements auf. Dies kann eine effizient drehbare Lagerung der Klammerelemente aneinander ermöglichen.

Ein weiterer Aspekt der Erfindung betriff eine Montagekomposition zur lösbaren Montage eines Objekts an einem insbesondere plattenförmigen Gegenstand, die ein Befestigungselement wie oben beschrieben und eine Halteleiste umfasst. Dabei weist die Halteleiste eine Befestigungsstruktur auf, mit der sie an einer Kante des Gegenstands befestigbar ist, und ist so dimensioniert, dass das erste Klammerelement der Klammer und das zweite Klammerelement des Befestigungselements die Halteleiste halten, wenn sich der erste Hebelabschnitt des ersten Klammerelements des Befestigungselement und der zweite Hebelabschnitt des zweiten Klammerelements der Klammer in der gespreizten Hebelstellung befinden, und die Halteleiste nicht halten, wenn sich der erste Hebelabschnitt des ersten Klammerelements des Befestigungselements und der zweite Hebelabschnitt des zweiten Klammerelements des Befestigungselements in der ungespreizten Hebelstellung befinden. Mit einer solchen Montagekomposition können die oben im Zusammenhang mit dem Befestigungselement und seinen bevorzugten Ausführungsformen beschriebenen Effekte und Vorteile effizient realisiert werden. Auch kann mittels der Halteleiste ein Gegenstand wie beispielsweise eine Tischplatte effizient nachgerüstet werden.

Ein anderer weiterer Aspekt der Erfindung betrifft eine Möbelkomposition mit einem insbesondere plattenförmigen Gegenstand, der eine erste, insbesondere obere, Oberfläche und eine parallel zu dieser verlaufenden und dieser gegenüberliegenden zweiten, insbesondere unteren, Oberfläche, umfasst, einem Befestigungselement wie oben beschrieben, welches in einer geschlossenen Stellung am Gegenstand befestigt ist, wobei der Auflagebereich des Befestigungselements auf der ersten Oberfläche aufliegt, und der erste Verbindungsabschnitt des ersten Klammerelements des Befestigungselements und der zweite Verbindungsabschnitt des zweiten Klammerelements des Befestigungselements auf der zweiten Oberfläche aufliegen. Mit einer solchen Möbelkomposition können die oben im Zusammenhang mit dem Befestigungselement und seinen bevorzugten Ausführungsformen beschriebenen Effekte und Vorteile effizient realisiert werden.

Vorzugsweise ist in der zweiten Oberfläche im Bereich einer Kante des insbesondere plattenförmigen Gegenstands ein parallel zur Kante verlaufender erster Hinterschnitt vorgesehen. Weiter weist der insbesondere plattenförmige Gegenstand bevorzugt eine Dicke d auf, und die Dicke d übersteigt die Weite w_{closed} des Haltebereichs in der geschlossenen Stellung geringfügig, insbesondere um 1% bis 20%, vorzugsweise um 2% bis 5%.

Bei geeigneter Beabstandung des ersten Hinterschnitts von der Kante kann ein erfindungsgemässes Befestigungselement mit am Ende der Verbindungsabschnitte vorgesehenen ersten und zweiten Nasen beziehungsweise Vorsprünge derart an dem insbesondere plattenförmigen Gegenstand festgehalten werden, dass der erste und der zweite Vorsprung in der geschlossenen Stellung in den ersten Hinterschnitt hineinragen, während der erste und/oder zweite Auflagebereich auf der ersten Oberfläche aufliegt, und vorzugsweise der erste und der zweite Verbindungsabschnitt auf der zweiten Oberfläche aufliegen. Dazu ist vorzugsweise eine Ausdehnung der Vorsprünge in Richtung parallel zur Drehachse so gewählt, dass sie eine Weite des ersten Hinterschnitts senkrecht zur Längsrichtung nicht übersteigt. Die Kombination aus Nasen beziehungsweise Vorsprüngen und erstem Hinterschnitt erlaubt eine zusätzliche Stabilisierung des Befestigungselements und sichert dieses zusätzlich gegen ein Abrutschen oder ein unbeabsichtigtes Abziehen vom insbesondere plattenförmigen Gegenstand. Ferner kann mittels einer Ausdehnung des Hinterschnitts in Richtung parallel zur Kante ein Bereich vorgegeben oder eingegrenzt werden, welcher für eine Montage von Objekten, insbesondere Arbeitsplatzzubehör, vorgesehen ist. So kann beispielsweise verhindert werden, dass sehr schweres Arbeitsplatzzubehör zu nahe im Bereich von Ecken der Arbeits- oder Tischplatte montiert wird, wo es gegebenenfalls eine Stabilität der Arbeits- oder Tischplatte oder gar der gesamten Möbelkomposition ungünstig beeinflussen würde.

In Ausgestaltungen der erfindungsgemässen Möbelkomposition ist an der ersten Oberfläche im Bereich einer Kante des insbesondere plattenförmigen Gegenstandes eine parallel zur Kante verlaufende Vertiefung, vorzugsweise in Form eines zweiten Hinterschnitts vorgesehen. Bei geeigneter Beabstandung des zweiten Hinterschnitts von der Kante kann ein Befestigungselement mit am ersten und/oder zweiten Auflagebereich vorgesehenem dritten beziehungsweise vierten Vorsprung derart an dem insbesondere plattenförmigen Gegenstand festgehalten werden, dass der dritte beziehungsweise vierte Vorsprung in der geschlossenen Stellung in die in den ersten Hinterschnitt hineinragen, während der erste und/oder zweite Auflagebereich auf der ersten Oberfläche aufliegt, und vorzugsweise der erste und der zweite Verbindungsabschnitt auf der zweiten Oberfläche aufliegen. Dazu ist vorzugsweise eine Ausdehnung der dritten bzw. vierten Vorsprüngen in Richtung parallel zur Drehachse so gewählt, dass sie eine Weite des zweiten Hinterschnitts senkrecht zur Längsrichtung nicht übersteigt. Die Kombination aus dritter beziehungsweise vierter Nase beziehungsweise Vorsprung und zweitem Hinterschnitt erlaubt eine zusätzliche Stabilisierung des Befestigungselements und sichert dieses zusätzlich gegen ein Abrutschen oder ein unbeabsichtigtes Abziehen von dem insbesondere plattenförmigen Gegenstand. Ferner kann mittels einer Ausdehnung des zweiten Hinterschnitts in Richtung parallel zur Kante ein Bereich vorgegeben oder eingegrenzt werden, welcher für eine Montage von Objekten insbesondere von Arbeitsplatzzubehör vorgesehen ist.

Der insbesondere plattenförmige Gegenstand kann vorzugsweise einstückig ausgebildet sein, wobei der erste und/oder zweite Hinterschnitt beispielsweise durch Materialabtrag wie mittels Fräsen in der ersten beziehungsweise zweiten Oberfläche im Bereich einer Kante ausgebildet sein kann. Dabei ist vorzugsweise ein erster Abstand der ersten und zweiten Vorsprüngen von den Hebelarmen so gewählt, dass er zumindest annähernd einem Abstand dem ersten Hinterschnitt von der Kante entspricht oder letzteren geringfügig übersteigt, und ein zweiter Abstand der dritten und/oder Vorsprüngen von den Hebelarmen so gewählt, dass er zumindest annähernd einem Abstand des zweiten Hinterschnitts von der Kante entspricht oder letzteren geringfügig übersteigt.

In Ausgestaltungen der erfindungsgemässen Möbelkomposition ist der erste und/oder zweite Hinterschnitt mittels eines zwei- oder mehrteiligen Aufbaus des insbesondere plattenförmigen Gegenstandes realisiert. Dabei ist an einer Kante eines insbesondere plattenförmigen Grundkörpers wie eine Tisch- oder Arbeitsplatte, ein Bord, ein Brett, ein Regal, einen Einlegeboden eines Regals o.Ä., einen Kranz eines Schranks usw. handeln kann, eine Halteleiste befestigt, welche so dimensioniert ist, dass das erste Klammerelement des Befestigungselements und das zweite Klammerelement des Befestigungselements die Halteleiste halten, wenn sich der erste Hebelabschnitt des ersten Klammerelements und der zweite Hebelabschnitt des zweiten Klammerelements in der gespreizten Hebelstellung befinden, und vorzugsweise die Halteleiste nicht halten, wenn sich der erste Hebelabschnitt des ersten Klammerelements und der zweite Hebelabschnitt des zweiten Klammerelements in der ungespreizten Hebelstellung befinden.

In Ausgestaltungen der erfindungsgemässen Möbelkomposition weist dabei die Halteleiste einen ersten Hinterschnitt beziehungsweise eine erste Nut auf, in der der erste Vorsprung des ersten Verbindungsabschnitts des ersten Klammerelements und der zweite Vorsprung des zweiten Verbindungsabschnitts des zweiten Klammerelements des Befestigungselements anordbar sind, und/oder einen zweiten Hinterschnitt beziehungsweise eine zweite Nut, in welcher der dritte Vorsprung des ersten Klammerelements und der vierte Vorsprung des zweiten Klammerelements des Befestigungselements anordbar sind, wenn das erste Klammerelement des Befestigungselements und das zweite Klammerelement des Befestigungselements die Halteleiste halten.

In Ausgestaltungen der erfindungsgemässen Möbelkomposition wird zwischen der Halteleiste und dem insbesondere plattenförmigen Grundkörper ein erster Hinterschnitt beziehungsweise eine erste Nut gebildet, in der der erste Vorsprung des ersten Verbindungsabschnitts des ersten Klammerelements und der zweite Vorsprung des zweiten Verbindungsabschnitts des zweiten Klammerelements des Befestigungselements anordbar sind, wenn das erste Klammerelement des Befestigungselements und das zweite Klammerelement des Befestigungselements die Halteleiste halten, und/oder ein zweiter Hinterschnitt beziehungsweise eine zweite Nut gebildet, in welcher der dritte Vorsprung des ersten Klammerelements und der vierte Vorsprung des zweiten Klammerelements des Befestigungselements anordbar sind, wenn das erste Klammerelement des Befestigungselements und das zweite Klammerelement des Befestigungselements die Halteleiste halten.

Die Halteleiste ist dabei vorzugsweise als Profilleiste insbesondere aus Metall, Holz oder einem festen Kunststoff ausgebildet. Vorzugsweise weist die Halteleiste einen zumindest im wesentlichen L- oder U-förmigen Querschnitt auf. Vorzugsweise weist die Halteleiste ferner eine Befestigungsstruktur auf, mittels welcher sie an einer Kante eines insbesondere plattenförmigen Gegenstandes befestigbar ist.

Bei einem zwei- oder mehrteiligen Aufbau des insbesondere plattenförmigen Gegenstandes lässt sich somit auf einfache und effizient Art und Weise ein erster und/oder zweiter Hinterschnitt in dessen zweiter bzw. erster Oberfläche vorsehen, ohne dass ein Materialabtrag beispielsweise durch Fräsen erfolgen muss, was insbesondere bei grossen Arbeits- oder Tischplatten einen nicht unerheblichen fertigungstechnischen Vorteil darstellt.

Unter Verwendung einer Halteleiste wie vorstehend beschrieben kann ein bestehender, plattenförmiger Gegenstand wie insbesondere eine Tisch- oder Arbeitsplatte aber auch ein Bord, ein Brett, ein Regal, einen Einlegeboden eines Regals o.Ä., ein Kranz eines Schranks usw., nachgerüstet werden, um in Verbindung mit einem erfindungsgemässen Befestigungselement eine erfindungsgemässe Möbelkomposition zu erhalten.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden das erfindungsgemässe Befestigungselement unter Bezugnahme auf die beigefügten Zeichnungen anhand von Ausführungsbeispielen detaillierter beschrieben.
- Fig.1: zeigt eine perspektivische Ansicht eines Ausführungsbeispiels eines erfindungsgemässen Befestigungselements in einer geschlossenen Stellung beziehungsweise gespreizten Hebelstellung beziehungsweise ungespreizten Stativstellung;
- Fig. 2: zeigt eine andere perspektivische Ansicht des Befestigungselements aus Fig. 1;
- Fig. 3: zeigt das Befestigungselement aus Fig. 1 in einer Frontansicht senkrecht zur Drehachse;
- Fig. 4: zeigt das Befestigungselement aus Fig. 1 in einer Seitenansicht in Richtung der Drehachse;
- Fig. 5: zeigt eine perspektivische Ansicht des Befestigungselements von Fig. 1 in einer geöffneten Stellung beziehungsweise ungespreizten Hebelstellung beziehungsweise gespreizten Stativstellung,
- Fig. 6: zeigt eine andere perspektivische Ansicht des Befestigungselements aus Fig. 5;
- Fig. 7: zeigt das Befestigungselement aus Fig. 5 in einer Frontansicht senkrecht zur Drehachse;
- Fig. 8: zeigt das Befestigungselement aus Fig. 5 in einer Seitenansicht in Richtung der Drehachse;
- Fig.9: eine perspektivische Explosionsansicht einer Halteleiste eines Ausführungsbeispiels einer erfindungsgemässen Montagekomposition zur Montage an einem insbesondere plattenförmigen Grundkörper; und
- Fig. 10: einen Querschnitt durch die Halteleiste aus Fig. 9.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

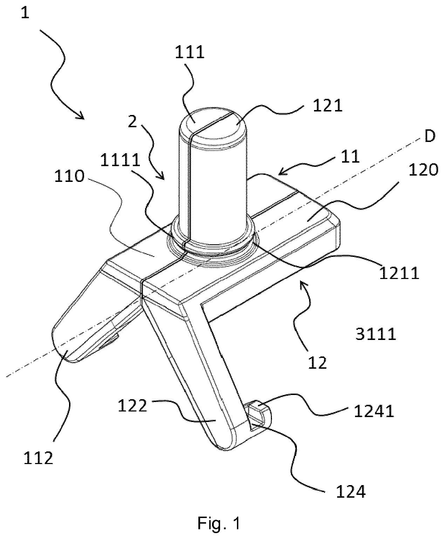

Fig. 1, Fig. 2, Fig. 3 und Fig. 4 zeigen ein Ausführungsbeispiel eines erfindungsgemässen Befestigungselements 1 in Form einer Klammer in einer geschlossenen Stellung beziehungsweise in einer gespreizten Hebelstellung beziehungsweise in einer ungespreizten Stativstellung. Das Befestigungselement 1 dient zur formschlüssigen Befestigung an einem plattenförmigen Gegenstand wie insbesondere einer Tischplatte und umfasst ein einstückiges erstes Klammerelement 11 sowie ein am ersten Klammerelement 11 bezüglich einer Drehachse D drehbar gelagertes einstückiges zweites Klammerelement 12. Das erste Klammerelement 11 weist einen ersten Basisabschnitt 110 auf, der im Wesentlichen eine Form eines in Richtung der Drehachse langgestreckten Quaders hat. Im Bereich einer Oberseite des ersten Basisabschnitts 110 ist ein erster Stativabschnitt 111 angeformt, welcher eine Form eines sich senkrecht zur Drehachse D nach oben erstreckenden Halbzylinders mit einem planaren und einem zylindrischen Oberflächenbereich aufweist. In einem vorderen Bereich und an einer Unterseite des ersten Basisabschnitts 110 ist ein erster Hebelabschnitt 112 angeformt, welcher sich im Wesentlichen senkrecht zur Drehachse D und in einem stumpfen Winkel α zum ersten Stativabschnitt erstreckt. An einer Unterseite des ersten Basisabschnitts 110 ist ein erster, planarer Oberflächenbereich 113 ausgebildet, welcher als erster Auflageabschnitt eines Auflagebereichs des Befestigungselements 1 dient. In einem Bereich eines von der Drehachse D entfernten Endes des ersten Hebelabschnitts 112 ist ein sich vom ersten Hebelabschnitt 112 weg in Richtung parallel zur Drehachse D erstreckender erster Verbindungsabschnitt 114 angeformt. Im Bereich eines vom ersten Hebelabschnitt 112 entfernten Endes des ersten Verbindungsabschnitts 114 ist ferner ein erster Vorsprung 1141 beziehungsweise eine erste Nase ausgebildet, welche(r) sich in Richtung auf die Drehachse D und in Richtung auf den ersten Auflagebereich 113 zu erstreckt.

Das zweite Klammerelement 12 ist mit Ausnahme von solchen Bereichen und/oder Elementen, die der drehbaren Lagerung des zweites Klammerelements 12 am ersten Klammerelement 11 dienen oder für diese erforderlich sind, im Wesentlichen spiegelsymmetrisch zum ersten Klammerelement 11 ausgeführt. Es weist einen zweiten Basisabschnitt 120 auf, der im Wesentlichen eine Form eines in Richtung der Drehachse D langgestreckten Quaders hat. Im Bereich einer Oberseite des zweiten Basisabschnitts 120 ist ein zweiter Stativabschnitt 121 angeformt, welcher eine Form eines sich senkrecht zur Drehachse D nach oben erstreckenden Halbzylinders mit einem planaren und einem zylindrischen Oberflächenbereich aufweist. In einem vorderen Bereich einer Unterseite des zweiten Basisabschnitts 120 ist ein zweiter Hebelabschnitt 122 angeformt, welcher sich im Wesentlichen senkrecht zur Drehachse D und in einem stumpfen Winkel -α zum zweiten Stativabschnitt 121 erstreckt. An einer Unterseite des zweiten Basisabschnitts 120 ist ein zweiter planarer Oberflächenbereich 123 ausgebildet, welcher als zweiter Auflageabschnitt des Auflagebereichs des Befestigungselements 1 dient, und mit dem ersten Auflagebereich 113 den gemeinsamen planaren Auflagebereich bildet, wenn sich das Befestigungselement, wie in den Fig. 1-4 gezeigt, in der geschlossenen Stellung befindet. In einem Bereich eines von der Drehachse D entfernten Endes des zweiten Hebelabschnitts 122 ist ein sich vom zweiten Hebelabschnitt 122 weg in Richtung der beziehungsweise parallel zur Drehachse erstreckender zweiter Verbindungsabschnitt 124 angeformt. Im Bereich eines vom zweiten Hebelabschnitt 122 entfernten Endes des zweiten Verbindungsabschnitts 124 ist ferner ein zweiter Vorsprung 1241 beziehungsweise Nase ausgebildet, welche(r) sich in Richtung auf die Drehachse D und in Richtung auf den zweiten Auflagebereich 123 zu erstreckt.

In der in den Fig. 1 bis 4 gezeigten geschlossenen Stellung des Befestigungselements 1 sind die beiden Halbzylinder, welche den ersten Stativabschnitt 111 und den zweiten Stativabschnitt 121 bilden, so positioniert, dass ihre jeweiligen planaren Oberflächenbereiche aneinander liegen. Der erste Stativabschnitt 111 und der zweite Stativabschnitt 121 sind so in der ungespreizten Stativstellung. Dabei wird ein Stativelement gebildet, welches einen Zylinder 2 umfasst, der sich senkrecht zur Drehachse D und senkrecht zum ersten Auflagebereich 113 und zum zweiten Auflagebereich 123 erstreckt. Gleichzeitig befinden sich in der geschlossenen Stellung des Befestigungselements 1 der erste Hebelabschnitt 112 des ersten Klammerelements 11 und der zweite Hebelabschnitt 122 des zweiten Klammerelements 12 in der gespreizten Hebelstellung und weisen einen maximalen Hebelspreizwinkel γₘₐₓ auf. Der erste Stativabschnitt 111 des ersten Klammerelements 11 und der zweite Stativabschnitt 121 des zweiten Klammerelements 12 befinden sich hingegen in der ungespreizten Stativstellung und weisen einen Stativspreizwinkel von zumindest annähernd 0° auf. Zwischen erstem Auflagebereich 113 und zweitem Auflagebereich 123 einerseits und erstem Halteelement 114 und zweiten Halteelement 124 andererseits ist ein Haltebereich gebildet, der in der geschlossenen Stellung eine Weite w_{closed} aufweist, welche eine minimale Halteweite darstellt. Die minimale Halteweite w_{closed} entspricht einem kürzesten Abstand zwischen einer Ebene, in welcher die beiden Verbindungsabschnitte 114, 124 liegen, und dem Auflagebereich während sich die Hebelabschnitte 112, 122 in der gespreizten Hebelstellung befinden.

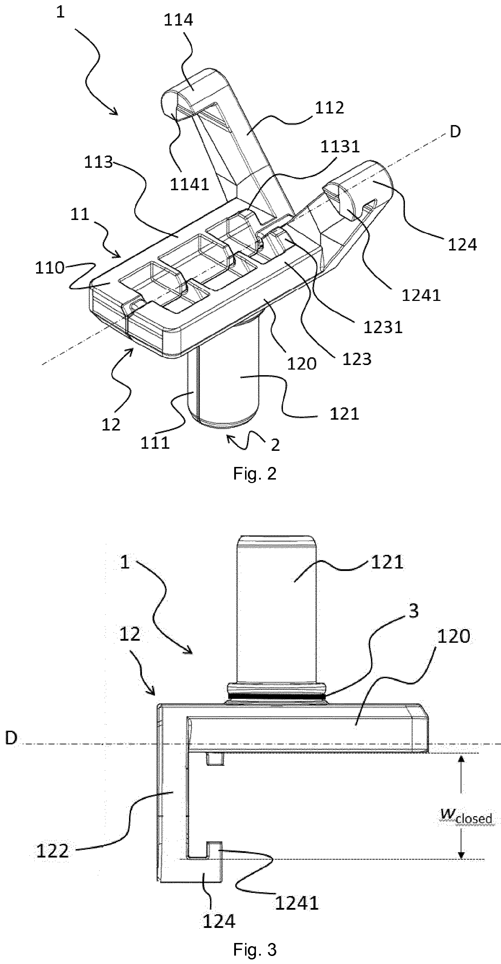

In einem unteren Bereich der Stativabschnitte 111, 112 ist jeweils ein nutförmiger erster Aufnahmebereich 1111 beziehungsweise zweiter Aufnahmebereich 1211. In der geschlossenen Stellung bilden der erste Aufnahmebereich 1111 und der zweite Aufnahmebereich 1211 eine um das Stativelement herum verlaufende Rinne. Wie in der Fig. 3 ersichtlich ist in den Aufnahmebereichen 1111, 1211 ein O-Ring 3 als elastisches Band eines Federelements angeordnet. Der O-Ring 3 spannt das Befestigungselement 1 in Richtung der geschlossenen Stellung vor beziehungsweise drückt die Stativabschnitte 111, 121 in die ungespreizte Stativstellung. Dazu ist der O-Ring 3 bereits in der geschlossenen Stellung des Befestigungselements 1 zumindest geringfügig elastisch gedehnt. Wird das Befestigungselement 1 in Richtung der geöffneten Stellung verstellt, wird der O-Ring 3 weiter gedehnt, und übt auf die Klammerelemente 11, 12 ein Rückstellmoment in Richtung der geschlossenen Stellung aus. Dabei drückt der O-Ring 3 die Stativabschnitte 111, 121 konstant in die ungespreizte Stativstellung und die Hebelabschnitte 112, 122 in die gespreizte Hebelstellung.

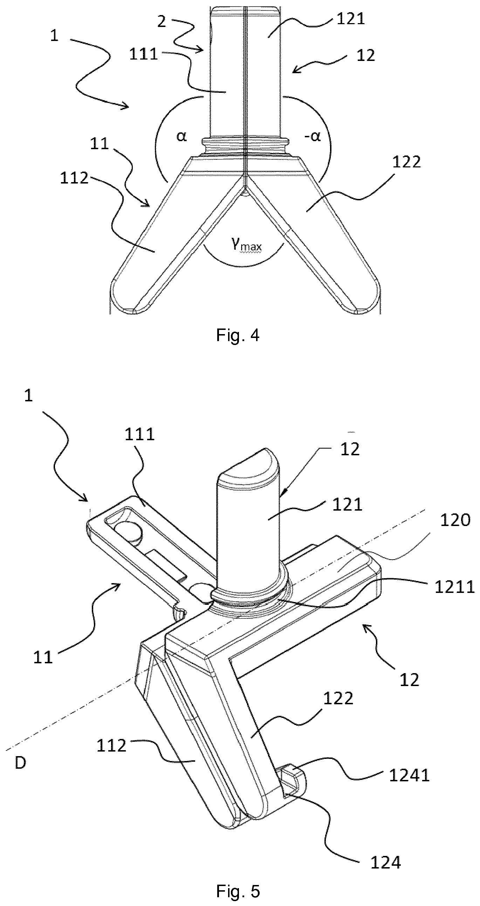

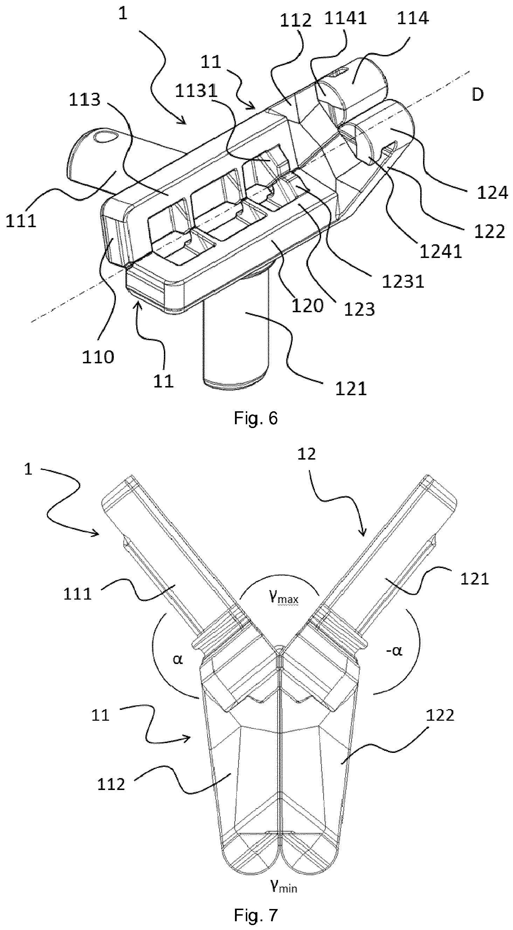

In der in den Fig. 5 bis 8 gezeigten geöffneten Stellung des Befestigungselements 1 befinden sich der erste Hebelabschnitt 112 des ersten Klammerelements 11 und der zweite Hebelabschnitt 122 des zweiten Klammerelements 12 in einer ungespreizten Hebelstellung und weisen einen Hebelspreizwinkel von zumindest annähernd 0° auf. Der erste Stativabschnitt 111 des ersten Klammerelements 11 und der zweite Stativabschnitt 121 des zweiten Klammerelements 12 befinden sich hingegen in einer gespreizten Stativstellung und weisen einen Stativspreizwinkel von zumindest annähernd γₘₐₓ auf. Der Haltebereich weist in der geöffneten Stellung eine maximale Weite wₒₚₑₙ mit wₒₚₑₙ > w_{closed} auf. Die maximale Halteweite wₒₚₑₙ entspricht einem kürzesten Abstand zwischen der Ebene, in welcher die beiden Verbindungsabschnitte 114, 124 liegen, und dem Auflagebereich während sich die Hebelabschnitte 112, 122 in der ungespreizten Hebelstellung befinden.

Am ersten Auflageabschnitt 113 ist ein dritter Vorsprung 1131 insbesondere in Form einer dritten Nase ausgebildet, welcher sich in Richtung von der Drehachse D weg erstreckt. Am zweiten Auflagebereich 123 ist ein vierter Vorsprung 1231 insbesondere in Form einer vierten Nase ausgebildet, welcher sich in Richtung von der Drehachse D weg erstreckt.

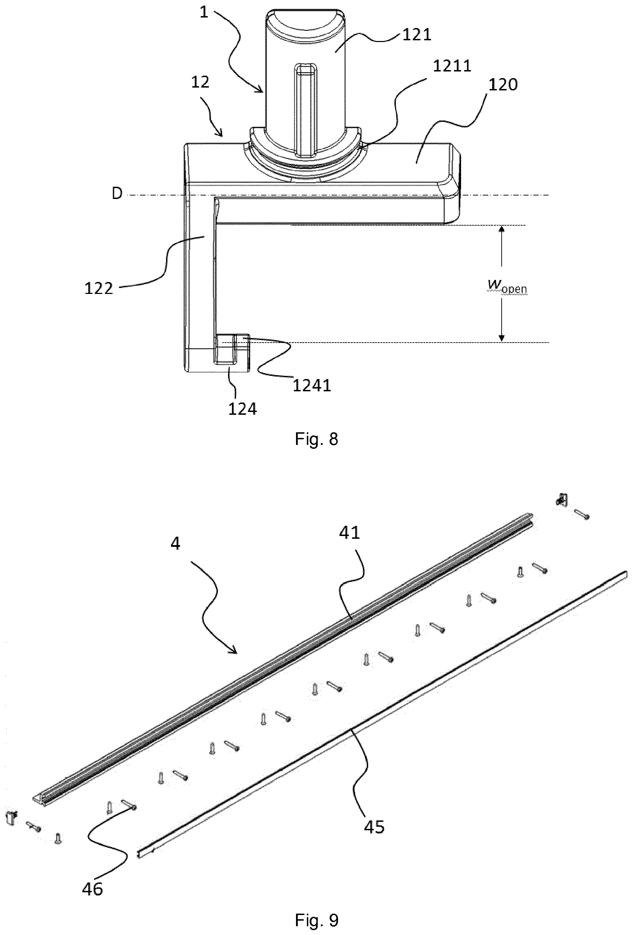

Wie in Fig. 8 ersichtlich ist der O-Ring 3 in der gespreizten Stativstellung elastisch gedehnt. Dadurch zieht er die Stativabschnitte 111, 121 aufeinander zu in die ungespreizte Stativstellung. Dies bewirkt zeitgleich, dass die Hebelabschnitte 112, 122 von der ungespreizten Hebelstellung in die gespreizte Hebelstellung gedrückt werden. Die Klammerelemente 11, 12 sind also durch den gedehnten O-Ring 3 vorgespannt.

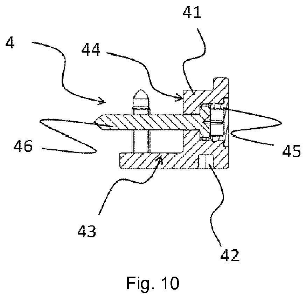

Fig. 9 und Fig. 10 zeigen eine Halteleiste 4 eines Ausführungsbeispiels einer erfindungsgemässen Montagekomposition in Form einer Profilleiste zur Montage an einem insbesondere plattenförmigen Grundkörper wie beispielsweise einer Tischplatte. Die Halteleiste 4 umfasst ein Stufenprofil 41, Befestigungsschrauben 46 als Befestigungsstruktur und eine Frontabdeckung 45. Das Stufenprofil 41 bildet eine Hinterschneidung sowie einen Nutbereich 42 als Hinterschnitt. Die Halteleiste 4 kann im Bereich eines Randes beziehungsweise einer Kante des plattenförmigen Grundkörpers so montiert beziehungsweise verschraubt werden, dass ein erster Anschlagbereich 43 an oder auf einer ersten, einer zweiten, insbesondere unteren Oberfläche des plattenförmigen Gegenstandes anliegt und ein zweiter Anschlagbereich 44 an einem seitlichen Rand des insbesondere plattenförmigen Grundkörper anliegt. Die Halteleiste 4 bildet dann zusammen mit dem insbesondere plattenförmigen Grundkörper einen insbesondere plattenförmigen Gegenstand, wobei in einer ersten Oberfläche des insbesondere plattenförmigen Gegenstands durch den seitlichen Rand des insbesondere plattenförmigen Grundkörpers in Verbindung mit der Hinterschneidung beziehungsweise dem Stufenprofil 41 eine erste Nut beziehungsweise ein erster Hinterschnitt gebildet ist. In einer zweiten Oberfläche des insbesondere plattenförmigen Gegenstands wird ferner durch den Nutbereich 42 eine zweite Nut beziehungsweise ein zweiter Hinterschnitt gebildet.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr", "quasi" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

Die vorliegende Offenbarung umfasst weitere Varianten von Befestigungselementen, Montagekompositionen und Möbelkompositionen. Insbesondere sind nachstehende Varianten mitoffenbart, die beziehungsweise deren Merkmale miteinander oder mit der Erfindung kombiniert werden können:

Variante 1 ist ein Befestigungselement zur formschlüssigen beziehungsweise klemmenden Befestigung an einem insbesondere plattenförmigen Gegenstand, umfassend
a. ein erstes Klammerelement,
b. ein, am ersten Klammerelement bezüglich einer Drehachse drehbar gelagertes, zweites Klammerelement, wobei
c. das erste Klammerelement
   i. einen sich zumindest im Wesentlichen senkrecht zur Drehachse erstreckenden ersten Stativabschnitt,
   ii. einen sich zumindest im Wesentlichen senkrecht zur Drehachse und in einem stumpfen Winkel zum ersten Stativabschnitt erstreckenden, ersten Hebelabschnitt, sowie
   iii. einen zumindest in Richtung der Drehachse erstreckenden ersten Auflagebereich umfasst, und
   iv. wobei am ersten Hebelabschnitt ein sich vom Hebelabschnitt weg parallel zur Drehachse erstreckender erster Verbindungsabschnitt vorgesehen ist;
d. das zweite Klammerelement
   i. einen sich zumindest im Wesentlichen senkrecht zur Drehachse erstreckenden, zweiten Stativabschnitt sowie
   ii. einen sich zumindest im Wesentlichen senkrecht zur Drehachse und in einem stumpfen Winkel zum zweiten Stativabschnitt erstreckenden zweiten Hebelabschnitt umfasst,
   iii. wobei am zweiten Hebelabschnitt ein sich vom Hebelabschnitt weg parallel zur Drehachse erstreckender zweiter Verbindungsabschnitt vorgesehen ist; wobei
e. das Befestigungselement
   i. durch Drehen des zweiten Klammerelements um die Drehachse in einer ersten Orientierung unter Spreizung der Stativabschnitte von einer geschlossenen in eine geöffnete Stellung überführbar ist,
   ii. durch Drehen des zweiten Klammerelements um die Drehachse in einer zweiten, der ersten entgegengesetzten Orientierung unter Spreizung der Hebelabschnitte von der geöffneten in die geschlossene Stellung überführbar ist,
   iii. einen Haltebereich für den Gegenstand aufweist, welcher zwischen dem ersten Auflagebereich und den beiden Verbindungsabschnitten gebildet ist; und
f. eine erste Weite des Haltebereichs in der geöffneten Stellung gegenüber einer zweiten Weite des Haltebereichs in der geschlossenen Stellung erhöht ist.

Variante 2 ist ein Befestigungselement nach Variante 1, dadurch gekennzeichnet, dass der erste Verbindungsabschnitt im Bereich eines von der Drehachse entfernten Endes des ersten Hebelabschnitts gebildet ist und der zweite Verbindungsabschnitt im Bereich eines von der Drehachse entfernten Endes des zweiten Hebelabschnitts gebildet ist.

Variante 3 ist ein Befestigungselement nach Variante 1 oder 2, dadurch gekennzeichnet, dass das zweite Klammerelement einen sich zumindest in Richtung der Drehachse erstreckenden zweiten Auflagebereich umfasst.

Variante 4 ist ein Befestigungselement nach Variante 3, dadurch gekennzeichnet, dass
a. der erste Auflagebereich von einem am ersten Klammerelement ausgebildeten, parallel zur Drehachse orientierten planaren ersten Oberflächenbereich gebildet ist,
b. der zweite Auflagebereich von einem am zweiten Klammerelement ausgebildeten, parallel zur Drehachse orientierten zweiten planaren Oberflächenbereich gebildet ist,
c. der erste und der zweite planare Oberflächenbereich in der geschlossenen Stellung des Befestigungselements parallel zueinander ausgerichtet sind und
d. einen gemeinsamen, vorzugsweise zusammenhängenden, Auflagebereich bilden, wobei der Haltebereich zwischen dem gemeinsamen Auflagebereich und den beiden Verbindungsabschnitten gebildet ist.

Variante 5 ist ein Befestigungselement nach einer der vorangehenden Varianten, dadurch gekennzeichnet, dass der erste Stativabschnitt und der zweite Stativabschnitt zusammen in der geschlossenen Stellung einen sich senkrecht zur Drehachse erstreckenden Zylinder bilden, wobei sie vorzugsweise aneinander anliegen.

Variante 6 ist ein Befestigungselement nach einer der vorangehenden Varianten, dadurch gekennzeichnet, dass im Bereich eines vom ersten Hebelabschnitt entfernten Endes des ersten Verbindungsabschnitts ein erster Vorsprung ausgebildet ist, welcher sich in Richtung auf die Drehachse und/oder auf den ersten Auflagebereich erstreckt; und/oder im Bereich eines vom zweiten Hebelabschnitt entfernten Endes des zweiten Verbindungsabschnitts ein zweiter Vorsprung ausgebildet ist, welcher sich in Richtung auf die Drehachse und/oder auf den ersten und oder zweiten Auflagebereich erstreckt.

Variante 7 ist ein Befestigungselement nach einer der vorangehenden Varianten, dadurch gekennzeichnet, dass die Befestigungselement Mittel, insbesondere ein elastisches Element, zur Vorspannung des Befestigungselements in Richtung auf die geschlossene Stellung aufweist.

Variante 8 ist ein Befestigungselement nach Variante 7, dadurch gekennzeichnet, dass das elastische Element ein zumindest im Wesentlichen ringförmiges, elastisches Band umfasst, welches um den ersten und den zweiten Stativabschnitt herum verläuft, vorzugsweise in einem Bereich in einer Nähe zur Drehachse.

Variante 9 ist ein Befestigungselement nach einer der vorangehenden Varianten, dadurch gekennzeichnet, dass die Klammerelemente elastisch ausgeführt sind.

Variante 10 ist ein Befestigungselement nach einer der vorangehenden Varianten, dadurch gekennzeichnet, dass das erste Klammerelement in einem Bereich zwischen erstem Stativabschnitt und erstem Hebelabschnitt eine parallel zur Drehachse verlaufende zylindrische Öffnung, vorzugsweise Bohrung aufweist zur drehbaren Lagerung des zweiten Klammerelements aufweist.

Variante 11 ist ein Befestigungselement nach Variante 10, dadurch gekennzeichnet, dass der erste Auflagebereich von einem Oberflächenbereich des ersten Klammerelements gebildet wird, welcher einen Bereich eines Zylindermantels darstellt, welcher Zylindermantel konzentrisch zur zylindrischen Öffnung verläuft.

Variante 12 ist eine Möbelkomposition umfassend
a. einen insbesondere plattenförmigen Gegenstand mit einer ersten, insbesondere oberen, Oberfläche und einer parallel zu dieser verlaufenden und dieser gegenüberliegenden zweiten, insbesondere unteren Oberfläche,
b. ein Befestigungselement nach einer der vorangehenden Varianten, welches in geschlossener Stellung am insbesondere plattenförmigen Gegenstand befestigt ist, wobei
   i. der erste Auflagebereich oder der gemeinsame Auflagebereich auf der ersten Oberfläche aufliegt;
   ii. der erste und der zweite Verbindungsabschnitt auf der zweiten Oberfläche aufliegen.

Variante 13 ist eine Möbelkomposition nach Variante 12, dadurch gekennzeichnet, dass
a. in der zweiten Oberfläche im Bereich einer Kante des insbesondere plattenförmigen Gegenstands eine parallel zur Kante verlaufende erste Nut beziehungsweise ein parallel zur Kante verlaufender erster Hinterschnitt vorgesehen ist, und
b. das Befestigungselement nach Variante 6 gebildet ist, wobei der erste Vorsprung und der zweite Vorsprung in die erste Nut beziehungsweise den ersten Hinterschnitt hineinragen.

Variante 14 ist eine Möbelkomposition nach Variante 12 oder 13, dadurch gekennzeichnet, dass
a. der insbesondere plattenförmige Gegenstand eine Dicke d aufweist, und
b. die Befestigungselement nach Variante 9 gebildet ist, und
c. die Dicke *d* die Weite *w*_{closed} des Haltebereichs in der geschlossenen Stellung geringfügig, insbesondere um 1% bis 20%, vorzugsweise um 2% bis 5% übersteigt.

Variante 15 ist eine Montagekomposition zur lösbaren Montage eines Objekts an einem insbesondere plattenförmigen Gegenstand, die ein Befestigungselement nach einer der vorangehenden Varianten und eine Halteleiste umfasst, wobei die Halteleiste
a. eine Befestigungsstruktur aufweist, mit der die Halteleiste an einer Kante des Gegenstands befestigbar ist, und
b. so dimensioniert ist, dass das erste Klammerelement der Klammer und das zweite Klammerelement der Klammer die Halteleiste halten, wenn sich der erste Hebelabschnitt des ersten Klammerelements der Klammer und der zweite Hebelabschnitt des zweiten Klammerelements der Klammer in der gespreizten Hebelstellung befinden, und Halteleiste nicht halten, wenn sich der erste Hebelabschnitt des ersten Klammerelements der Klammer und der zweite Hebelabschnitt des zweiten Klammerelements der Klammer in der ungespreizten Hebelstellung befinden.

## Patentansprüche

1. Befestigungselement (1) zur formschlüssigen beziehungsweise klemmenden Befestigung an einem insbesondere plattenförmigen Gegenstand, umfassend
ein erstes Klammerelement (11) und ein zum ersten Klammerelement (11) um eine Drehachse (D) drehbares zweites Klammerelement (12), wobei das erste Klammerelement (11)
einen sich im Wesentlichen senkrecht zur Drehachse (D) erstreckenden ersten Hebelabschnitt (112) und
einen sich vom ersten Hebelabschnitt (112) im Wesentlichen parallel zur Drehachse (D) erstreckenden ersten Verbindungsabschnitt (114) aufweist; das zweite Klammerelement (12)
einen sich im Wesentlichen senkrecht zur Drehachse (D) erstreckenden zweiten Hebelabschnitt (122) und
einen sich vom zweiten Hebelabschnitt (122) im Wesentlichen parallel zur Drehachse (D) erstreckenden zweiten Verbindungsabschnitt (124) aufweist;
der erste Hebelabschnitt (112) des ersten Klammerelements (11) und der zweite Hebelabschnitt (122) des zweiten Klammerelements (12) zwischen einer gespreizten Hebelstellung und einer ungespreizten Hebelstellung um die Drehachse (D) zueinander bewegbar sind; und
das erste Klammerelement (11) und das zweite Klammerelement (12) dazu ausgestaltet sind, den Gegenstand zu halten, wenn sich der erste Hebelabschnitt (112) des ersten Klammerelements (11) und der zweite Hebelabschnitt (122) des zweiten Klammerelements (12) in der gespreizten Hebelstellung befinden, und den Gegenstand nicht halten, wenn sich der erste Hebelabschnitt (112) des ersten Klammerelements (11) und der zweite Hebelabschnitt (122) des zweiten Klammerelements (12) in der ungespreizten Hebelstellung befinden,
**dadurch gekennzeichnet dass**
das erste Klammerelement (11) einen sich im Wesentlichen senkrecht zur Drehachse (D) erstreckenden ersten Stativabschnitt (111) umfasst, der ortsfest mit dem ersten Hebelabschnitt (112) des ersten Klammerelements (11) verbunden ist und sich in einem stumpfen Winkel (α) zum ersten Hebelabschnitt (112) des ersten Klammerelements (11) erstreckt, und
das zweite Klammerelement (12) einen sich im Wesentlichen senkrecht zur Drehachse (D) erstreckenden zweiten Stativabschnitt (121) umfasst, der ortsfest mit dem zweiten Hebelabschnitt (122) des zweiten Klammerelements (12) verbunden ist und sich in einem stumpfen Winkel (-α) zum zweiten Hebelabschnitt (122) des zweiten Klammerelements (12) erstreckt, wobei
der erste Stativabschnitt (111) des ersten Klammerelements (11) und der zweite Stativabschnitt (121) des zweiten Klammerelements (12) sich in einer ungespreizten Stativstellung befinden, wenn sich der erste Hebelabschnitt (112) des ersten Klammerelements (11) und der zweite Hebelabschnitt (122) des zweiten Klammerelements (12) in der gespreizten Hebelstellung befinden, und
der erste Stativabschnitt (111) des ersten Klammerelements (11) und der zweite Stativabschnitt (121) des zweiten Klammerelements (12) sich in einer gespreizten Stativstellung befinden, wenn sich der erste Hebelabschnitt (112) des ersten Klammerelements (11) und der zweite Hebelabschnitt (122) des zweiten Klammerelements (12) in der ungespreizten Hebelstellung befinden.

2. Befestigungselement (1) nach Anspruch 1, wobei das erste Klammerelement (11) und das zweite Klammerelement (12) jeweils einstückig ausgebildet sind.

3. Befestigungselement (1) nach Anspruch 1 oder 2, das einen Auflagebereich (113, 123) umfasst, der dazu ausgestaltet ist, während einer Befestigung des Befestigungselements (1) am Gegenstand, bei der sich der erste Hebelabschnitt (112) des ersten Klammerelements (11) und der zweite Hebelabschnitt (122) des zweiten Klammerelements (12) in der gespreizten Hebelstellung befinden, am Gegenstand anzuliegen.

4. Befestigungselement (1) nach Anspruch 3, bei dem zwischen dem Auflagebereich (113, 123) und den beiden erster Verbindungsabschnitt (114) des ersten Klammerelements (11) und zweiter Verbindungsabschnitt (124) des zweiten Klammerelements (12) ein Haltebereich gebildet ist, dessen Weite (w_{closed}, wₒₚₑₙ) in der gespreizten Hebelstellung des ersten Hebelabschnitts (112) des ersten Klammerelements (11) und des zweiten Hebelabschnitts (122) des zweiten Klammerelements (12) kleiner ist als in der ungespreizten Hebelstellung des ersten Hebelabschnitts (112) des ersten Klammerelements (11) und des zweiten Hebelabschnitts (122) des zweiten Klammerelements (12).

5. Befestigungselement (1) nach Anspruch 3 oder 4, bei dem ein kürzester Abstand (w_{closed}, wₒₚₑₙ) zwischen einer Ebene, in welcher der erste Verbindungsabschnitt (114) des ersten Klammerelements (11) und der zweite Verbindungsabschnitt (124) des zweiten Klammerelements (12) liegen, und dem Auflagebereich (113, 123) in der gespreizten Hebelstellung des ersten Hebelabschnitts (112) des ersten Klammerelements (11) und des zweiten Hebelabschnitts (122) des zweiten Klammerelements (12) kleiner ist als in der ungespreizten Hebelstellung des ersten Hebelabschnitts (112) des ersten Klammerelements (11) und des zweiten Hebelabschnitts (122) des zweiten Klammerelements (12).

6. Befestigungselement (1) nach einem der Ansprüche 3 bis 5, bei dem sich der Auflagebereich (113, 123) in Richtung der Drehachse (D) erstreckt.

7. Befestigungselement (1) nach einem der Ansprüche 3 bis 6, bei dem das erste Klammerelement (11) einen ersten Auflageabschnitt (113) und das zweite Klammerelement (12) einen zweiten Auflageabschnitt (123) aufweisen, die zusammen den Auflagebereich (113, 123) bilden.

8. Befestigungselement (1) nach einem der vorangehenden Ansprüche, das ein Federelement (3) umfasst, welches so angeordnet ist, dass das erste Klammerelement (11) und das zweite Klammerelement (12) in die gespreizte Hebelstellung und in die ungespreizte Stativstellung gedrückt werden.

9. Befestigungselement (1) nach Anspruch 8, bei dem das Federelement (3) ein elastisches Band (3) aufweist, welches um den ersten Stativabschnitt (111) des ersten Klammerelements (11) und den zweiten Stativabschnitt (121) des zweiten Klammerelements (12) herum angeordnet ist.

10. Befestigungselement (1) nach einem der vorangehenden Ansprüche, bei dem der erste Hebelabschnitt (112) des ersten Klammerelements (11) und der zweite Hebelabschnitt (122) des zweiten Klammerelements (12) jeweils zwei Längsenden aufweisen, wobei die Drehachse (D) in einem Bereich des einen der Längsenden und der erste Verbindungsabschnitt (114) beziehungsweise der zweite Verbindungsabschnitt (124) in einem Bereich des anderen der Längsenden angeordnet ist.

11. Befestigungselement (1) nach einem der vorangehenden Ansprüche, bei dem der erste Verbindungsabschnitt (114) des ersten Klammerelements (11) und der zweite Verbindungsabschnitt (124) des zweiten Klammerelements (12) jeweils eine Nase (1141, 1241) aufweisen, die sich in Richtung auf die Drehachse (D) und/oder auf den Auflagebereich (113, 123) erstrecken.

12. Befestigungselement (1) nach einem der Ansprüche 7 bis 11,wobei
der erste Auflageabschnitt (113) des ersten Klammerelements (11) von einem am ersten Klammerelement (11) ausgebildeten planaren ersten Oberflächenbereich (113) gebildet ist,
der zweite Auflageabschnitt (123) des zweiten Klammerelements (12) von einem am zweiten Klammerelement (12) ausgebildeten planaren Oberflächenbereich (123) gebildet ist, und
der erste und der zweite planare Oberflächenbereich (113, 123) in der geschlossenen Stellung des Befestigungselements (1) so im Wesentlichen in einer Ebene liegen, dass sie den Auflagebereich (113, 123) bilden.

13. Befestigungselement (1) nach einem der vorangehenden Ansprüche, wobei der erste Stativabschnitt (111) des ersten Klammerelements (11) und der zweite Stativabschnitt (121) des zweiten Klammerelements (12) zusammen in der ungespreizten Stativstellung, in der sie vorzugsweise aneinander anliegen, einen sich im Wesentlichen senkrecht zur Drehachse (D) erstreckenden Zylinder (2) bilden.

14. Montagekomposition zur lösbaren Montage eines Objekts an einem insbesondere plattenförmigen Gegenstand, die ein Befestigungselement (1) nach einem der vorangehenden Ansprüche und eine Halteleiste (4) umfasst, wobei die Halteleiste (4)
eine Befestigungsstruktur aufweist, mit der die Halteleiste (4) an einer Kante des Gegenstands befestigbar ist, und
so dimensioniert ist, dass das erste Klammerelement (11) des Befestigungselements (1) und das zweite Klammerelement (12) des Befestigungselements (1) die Halteleiste (4) halten, wenn sich der erste Hebelabschnitt (112) des ersten Klammerelements (11) des Befestigungselement (1) und der zweite Hebelabschnitt (122) des zweiten Klammerelements (12) des Befestigungselement (1) in der gespreizten Hebelstellung befinden, und die Halteleiste (4) nicht halten, wenn sich der erste Hebelabschnitt (112) des ersten Klammerelements (11) des Befestigungselements (1) und der zweite Hebelabschnitt (122) des zweiten Klammerelements (12) des Befestigungselements (1) in der ungespreizten Hebelstellung befinden.

15. Möbelkomposition umfassend
einen insbesondere plattenförmigen Gegenstand mit einer ersten, insbesondere oberen, Oberfläche und einer parallel zu dieser verlaufenden und dieser gegenüberliegenden zweiten, insbesondere unteren Oberfläche,
ein Befestigungselement (1) nach einem der Ansprüche 1 bis 13, welches in einer geschlossenen Stellung klemmend beziehungsweise formschlüssig am Gegenstand befestigt ist, wobei
der Auflagebereich (113, 123) des Befestigungselements (1) auf der ersten Oberfläche aufliegt, und
der erste Verbindungsabschnitt des ersten Klammerelements (11) des Befestigungselements (1) und der zweite Verbindungsabschnitt des zweiten Klammerelements (12) des Befestigungselements (1) auf der zweiten Oberfläche aufliegen.
